(19) Europäisches Patentamt
European Patent Office
Office européen des brevets

(11) **EP 3 727 824 B1**

(12) **EUROPEAN PATENT SPECIFICATION**

(45) Date of publication and mention
of the grant of the patent:
**10.05.2023 Bulletin 2023/19**

(21) Application number: **18834050.9**

(22) Date of filing: **20.12.2018**

(51) International Patent Classification (IPC):
**B29D 30/36** *(2006.01)*     **B29D 30/28** *(2006.01)*
**B29D 30/06** *(2006.01)*

(52) Cooperative Patent Classification (CPC):
**B29D 30/28; B29D 30/36;** B29D 2030/0695

(86) International application number:
**PCT/IB2018/060401**

(87) International publication number:
**WO 2019/123351 (27.06.2019 Gazette 2019/26)**

(54) **DEVICE FOR APPLYING SEMI-FINISHED PRODUCTS INSIDE TYRES FOR VEHICLE WHEELS**

VORRICHTUNG ZUM AUFBRINGEN VON HALBZEUGEN IN REIFEN FÜR FAHRZEUGRÄDER

DISPOSITIF D'APPLICATION DE PRODUITS SEMI-FINIS À L'INTÉRIEUR DE PNEUS POUR ROUES DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2017 IT 201700148246**

(43) Date of publication of application:
**28.10.2020 Bulletin 2020/44**

(73) Proprietor: **Pirelli Tyre S.p.A.**
**20126 Milano (IT)**

(72) Inventors:
• **AMURRI, Cesare Emanuele**
**20126 Milano (IT)**
• **MANCINI, Gianni**
**20126 Milano (IT)**
• **DE COL, Christian**
**20126 Milano (IT)**

(74) Representative: **Tansini, Elio Fabrizio**
**Bugnion S.p.A.**
**Viale Lancetti 17**
**20158 Milano (IT)**

(56) References cited:
**EP-A1- 0 505 814**     **EP-A1- 0 507 111**
**EP-A1- 0 585 647**

## Description

The present invention relates to a device for applying semi-finished products inside tyres for vehicle wheels. The invention also regards a process for applying semi-finished products inside tyres for vehicle wheels, actuatable by means of said device.

In particular, in one embodiment described herein, the invention is adapted to be employed in making self-sealing tyres, in order to execute the application of a self-sealing sleeve inside a tyre being processed. The invention is nevertheless also actuatable for the application of elements of another type, e.g. liner, underliner, sensors and/or support elements thereof.

Self-sealing tyres are puncture-resistant tyres since they contain a self-sealing layer applied to the radially inner surface of the tyre, which automatically seals possible holes produced by the accidental penetration of nails, screws or other pointed bodies through the tyre.

The production cycles for producing a tyre provide for making and/or assembling the various components of a tyre, obtaining a green tyre and subsequently subjecting the green tyre to a moulding and vulcanisation process adapted to define the structure of the tyre according to a desired tread design and geometry.

With the term "semi-finished product" it is intended a component of the tyre made in the form of an annular sleeve, e.g. cylindrical, by means of assembly of one or more components that are equivalent to or different from each other.

In a preferred embodiment, the semi-finished product is a self-sealing sleeve to be applied inside a carcass structure. Alternatively, the semi-finished product can for example be represented by a liner or by a liner+under-liner assembly to be applied inside a carcass ply, or by a carcass structure (comprising at least one carcass ply associated with a pair of anchoring annular structures, each comprising at least one bead core and preferably a filler insert) or another component to be applied inside a crown structure (comprising at least one belt layer and one tread band).

With the term "self-sealing sleeve" it is intended an assembled semi-finished product having cylindrical shape, intended to make the self-sealing layer inside a tyre.

With "cylindrical shape" both of the self-sealing sleeve, and of a support/drum that sustains it, it is intended both a cylindrical shape having rectilinear generatrix and a slightly rounded shape having convex generatrix.

The terms "radial" and "axial" and the expressions "radially inner/outer" and "axially inner/outer" are used, when not otherwise expressly indicated, with reference to the radial/axial direction of said device, of a semi-finished product or of the tyre to which the semi-finished product is applied (or of a portion of these), i.e. to a direction perpendicular/parallel to a geometric axis of the device itself which, during application, substantially coincides with the rotation axis of the tyre and of the semi-finished product applied thereto.

The terms "circumferential" and "circumferentially" are used with reference to the annular wrapping of the device, of a semi-finished product or of the tyre (or of a portion of these) around a respective geometric rotation axis.

With "axial middle line plane" it is intended a plane perpendicular to the geometric axis of the tyre and equidistant from the axially outer portions of the tyre itself.

With "annular portion" of the self-sealing sleeve or another semi-finished product, it is intended a substantially annular portion having axial size smaller than the axial size of the self-sealing sleeve or another semi-finished product.

With "self-sealing material" it is intended a polymer material provided, after the vulcanisation of the tyre, with viscoelastic and stickiness characteristics such to allow the material to flow within a perforation caused by a sharp-pointed element and to adhere and be driven by said moving sharp-pointed element. Such polymer material can for example comprise a synthetic or natural elastomer, an elastomeric block copolymer, process oil, at least one bonding agent, and at least one reinforcement filler. With the generic term "tyre", when not further specified, it is indicated a green tyre being processed comprising at least one carcass structure having at least one toroidally-shaped carcass ply having the axially opposite end flaps thereof associated with respective bead cores and forming a pair of beads, as well as a green tyre, and a moulded and vulcanised tyre.

With "green tyre" it is indicated a tyre at the end of the building process not yet subjected to a moulding and vulcanisation process.

With "vulcanised tyre" or "moulded and vulcanised tyre" it is indicated a green tyre subjected to a moulding and vulcanisation process.

With "coaxial position" of two elements, e.g. of a device or of a semi-finished product with respect to the tyre, it is intended a relative position in which the rotation axis of the tyre coincides substantially with the geometric axis of the device or of the sleeve. Hence, when the self-sealing sleeve is arranged coaxial with the tyre to form a self-sealing complex and subsequently the device is introduced into the self-sealing complex, the axis of the self-sealing sleeve and of the device substantially coincide with each other and with the geometric rotation axis of the tyre and the aforesaid terms can be indiscriminately be referred to one axis or the other.

The document US2009/0205765 describes a method for obtaining a self-sealing tyre in which it is provided to arrange a vulcanised tyre and make a sealing band by extruding a self-sealing material on a laminar support. The sealing band is wound as a spiral in order to be introduced in the vulcanised tyre.

The document EP3009260 describes a self-sealing tyre comprising a sealing layer obtained by means of coiling of a sealing material directly on the radially inner surface of the vulcanised tyre placed in rotation around the axis thereof. In particular, the vulcanised tyre is mounted on a rotary driving device while a nozzle mounted at the outlet of an extruder is inserted within the tyre. The sealing material is extruded from the extruder and deposited on the surface of the tyre by means of the nozzle.

The document WO2011/064698 relates to a method for selectively controlling the self-sealing capacity of a tyre obtained via affixing of a sealing complex on a drum and subsequent formation thereon of a precursor of a green tyre including liner and carcass and subsequent shaping, moulding and vulcanisation.

EP 0 507 111 A1 addresses compacting multilayer products such as a green tire, by a rolling operation. A green tyre is placed inside a hollow mold having a concave inner surface a negatively matching the shape to be imparted on the tyre. rolling means including three arms, each equipped with a pair of conical rollers, are provided. A control device is provided for rotating arms, and about respective hinges, whereby the conical rollers are brought into contact, at a given pressure, with an inner concave surface of the tyre. A relative motion between the rolling means and the tyre is provided by rotating said rolling means about the axis of the tyre, to roll this latter in contact with the inner surface a of the mold.

EP 0 505 814 A1 relates to a mold equipping a tyre building unit comprising an inner rolling device according to EP 0 507 111 A1. EP 0 585 647 A1 relates to an inner rolling device cooperating with an annular tire forming mold and having a pair of rolling units each including a roller having an outer rolling surface and rotating about a first axis, and a support for said roller. First actuating means moves the first axis a to and from an operating position wherein said rolling surface contacts the inner surface of the tire. First drive means provides a first relative rotation of the rolling unit and the tire about the axis of the tire. Second drive means provides a second relative rotation of the rolling unit and the tire about a third axis substantially transverse in relation to said first and second axes.

The Applicant has established that the current production needs require a necessary level of flexibility at any step of the process, and that even only limiting the application of a sealing layer or of another semi-finished product to be arranged in radially inner position to a step following the vulcanisation would limit the possibilities of adapting the building process and the layout of the building plant to the individual production needs.

The Applicant then understood the importance of freeing, as much as possible, the step of application of the sealing layer from the specific building process in order to increase the flexibility of the building process and/or of the building plant. The Applicant has perceived that by making a semi-finished product (in a preferred case, a self-sealing sleeve) in a manner completely independent from the type of tyre building plant and process, it is possible to apply such semi-finished product to any type of green tyre being processed, green or moulded and vulcanised, obtained by means of any building process by operating a radial expansion of the semi-finished product and by radially pressing it from within the tyre in order to make it adhere inside the tyre itself.

The Applicant has nevertheless observed that in a built tyre, the difference existing between the fitting diameter detectable at the beads and the inner diameter detectable in proximity to the axial middle line plane may hinder an easy insertion of a semi-finished product (which is in the shape of a cylindrical sleeve), its subsequent application against the radially inner surface of the tyre itself, and/or the application of a radial pressure in order to make it completely adhere to the tyre. The beads are in fact likely to interfere with the semi-finished product during its introduction in the tyre.

The Applicant has also observed that the abovementioned problem becomes even more significant in the current production requirements of high flexibility, where the sizes of the produced tyres and hence their radially inner profiles have a high differentiation, since multiple production batches are possible in the same production shift.

The Applicant has finally observed that it is necessary to have a correct adhesion of the semi-finished product against the inner surfaces of the tyre which, in the shoulder zones, does not offer wide spaces for manoeuvring. Such adhesion must in particular be such to reduce the risk of permanence of air bubbles between the radially outer surface of the semi-finished product and the radially inner surface of the tyre in order to prevent defectiveness that could lead to the discard thereof.

The Applicant has perceived that in order to overcome the abovementioned problems, it is suitable to use a dedicated device for "forcing" and consolidating the association of the semi-finished product inside the tyre.

The Applicant has thus found that the application of the self-sealing sleeve or another semi-finished product inside a tyre, whether it is green being processed, green or already moulded and vulcanised, is facilitated by subjecting the semi-finished product, previously associated with the radially inner surface of the tyre, to an action of dynamic pressing actuated by means of a pressing element which slides in thrust relation against the semi-finished product itself.

In accordance with a first aspect, the invention relates to a device for applying a semi-finished product on a radially inner surface of a tyre for vehicle wheels.

Preferably a support group is provided, configured for retaining a tyre being processed.

Preferably, a processing head is provided, axially insertable in the tyre retained by the support group.

Preferably, a movement group is provided for mutually moving the processing head and said tyre around and along a geometric rotation axis.

Preferably the processing head comprises at least one radially extendable arm, having a proximal end constrained with respect to the processing head and a distal end carrying at least one pressing element.

Preferably driving devices are provided, operating on said arm in order to move it between a rest position in which the pressing element is moved close to the geometric rotation axis and a work position in which the pressing element is moved away from the geometric rotation axis in order to exert a thrust action towards a radially inner surface of the tyre.

In accordance with a second aspect, the invention relates to a process for applying a semi-finished product on a radially inner surface of a tyre.

Preferably it is provided to arrange a tyre and a semi-finished product on a radially inner surface of the tyre.

Preferably, it is provided to retain the tyre by means of a support group.

Preferably, it is provided to arrange at least one processing head comprising at least one arm that is radially extendable with respect to a geometric rotation axis, and carrying a pressing element at a distal end thereof.

Preferably, it is provided to position said arm in a rest position in which the pressing element is moved close to the geometric rotation axis.

Preferably, it is provided to axially insert the processing head in the tyre retained by the support group.

Preferably, it is provided to move said arm into a work position in which the pressing element is moved away from the geometric rotation axis in order to exert a thrust action on the semi-finished product towards the radially inner surface of the tyre. Preferably, it is provided to mutually move the processing head and said tyre around and along said geometric rotation axis, making the pressing element slide against the semi-finished product.

The Applicant deems that the thrust action exerted by the pressing element, simultaneously with the movement set by the movement group, facilitates the adhesion of the semi-finished product against the radially inner surface of the tyre. Indeed, the localized pressing action exerted by the pressing element against the semi-finished product is adapted to be suitably distributed over the extension of the semi-finished product, until reaching the complete adhesion thereof against the radially inner surface of the tyre, facilitating the progressive expulsion of the air possibly present, independent of the factors that can differentiate the tyres, including possible discontinuities present on the radially inner surface.

In at least one of the aforesaid aspects, the invention can also comprise one or more of the following preferred characteristics.

Preferably the driving devices are configured for elastically pushing the pressing element towards the work position.

The Applicant deems that the elastic thrust operated by the driving devices allows each pressing element to effectively follow the profile of the radially inner surface of the tyre, also in the presence of possible slight discontinuities.

Preferably the processing head is removably couplable to the movement group.

In this manner, it is possible to easily substitute the processing head coupled to the movement group with a different processing head. The Applicant deems that, at least in some embodiments, the overall flexibility of the production plant can be improved by arranging different processing heads, each adapted to processing a specific range of tyres, selectively and separately couplable to a single movement group.

Preferably the processing head is projectingly extended from the movement group, along the geometric rotation axis.

The Applicant deems that the projecting mounting of the processing head facilitates an easy axial insertion thereof within the tyre.

Preferably the movement group comprises a rotation actuator adapted to rotate the processing head around the geometric rotation axis.

The Applicant deems that, at least in some embodiments, the mutual movement between the processing head and the tyre around the geometric rotation axis is facilitated by setting the rotation of the processing head and maintaining the tyre stopped.

Preferably the movement group comprises a translation actuator adapted to move the processing head along the geometric rotation axis.

The Applicant deems that, at least in some embodiments, the mutual movement between the processing head and the tyre along the geometric rotation axis is facilitated by setting a translation of the processing head and maintaining the tyre stopped.

Preferably the movement group comprises an anthropomorphic robotic arm.

Preferably the movement group comprises an anthropomorphic robotic arm having at least six movement axes.

The Applicant deems that, at least in some embodiments, the use of an anthropomorphic robotic arm can facilitate a greater flexibility of overall production, since the robotic arm can possibly be programmed and used for carrying out different operations.

Preferably the processing head comprises a plurality of arms. The Applicant deems that the presence of multiple arms, equipped with respective pressing elements, can facilitate and in certain cases speed up the application of the semi-finished product on the radially inner surface of the tyre.

Preferably the proximal ends of the arms are circumferentially equally spaced on the processing head around the geometric rotation axis.

It is thus possible to confer a greater rotation equilibrium to the processing head in its entirety.

Preferably the arm has a substantially curvilinear longitudinal extension lying in a plane orthogonal to the geometric rotation axis.

Preferably, in the rest position, the proximal end of each arm is partially circumscribed by a concavity defined by the curvilinear extension of the circumferentially adjacent arm.

The Applicant has observed that, in the presence of multiple arms included on the processing head, the curvilinear longitudinal extension of the arm allows maximizing the distance between the proximal end and the distal end of the arm, without excessively increasing the bulk of the processing head in the rest condition. Indeed, in the rest condition, each arm can receive in the concavity defined by its curvilinear extension, the proximal end of the arm circumferentially adjacent thereto.

Preferably the driving devices comprise at least one rotary movement actuator operating on the proximal end of the arm. The Applicant deems that the arrangement of a rotary movement actuator allows limiting the overall bulk of the driving devices. Preferably the driving devices comprise at least one movement actuator for each of said arms.

Each pressing element can therefore exert its thrust action independent of the position assumed by the pressing elements mounted on the other arms, so as to effectively follow the profile of the radially inner surface of the tyre, also in the presence of possible slight discontinuities.

Preferably said driving devices are configured for setting a rotation of the arm in a plane perpendicular to the geometric rotation axis.

Preferably the movement actuator has pneumatic actuation.

The Applicant deems that the arrangement of a movement actuator with pneumatic actuation allows limiting the weight and the bulk of the actuator itself, at the same time allowing benefiting from the compressibility of air in order to obtain an elastic thrust effect.

Preferably the movement actuator is double-acting.

It is thus possible to limit the weight and the bulk of the actuator.

Preferably the movement actuator comprises a containment shell internally having a first and a second chamber mutually separated by a movable element rigidly connected with the proximal end of the arm.

Preferably said driving devices are mounted on board the processing head.

In this manner, since the movement actuator is moved together with the processing head, the transmission of the motion from the movement actuator to the arm is simplified.

Preferably the movement actuator is power supplied by at least one pneumatic duct leading to a valve connection carried by the processing head.

Preferably the valve connection is operatively couplable with a valve engagement carried by said movement group.

The Applicant deems that the arrangement of a valve connection and of a valve engagement operatively couplable together represents a simple and reliable solution for driving the movement actuator, at the same time offering the interchangeability and freedom of movement of the processing head.

Preferably the movement group comprises a grip member removably engageable with the processing head.

In such a manner, the operations of substitution of the processing head are facilitated, improving the overall flexibility of the production plant.

Preferably the valve engagement is movable between a drive position in which it is operatively coupled to the valve connection and a wait position in which it is operatively decoupled from the valve connection.

Preferably the valve engagement is movable with respect to said grip member between a drive position in which it is operatively coupled to the valve connection and a wait position in which it is operatively decoupled from the valve connection.

The possibility of operatively coupling the valve connection and the valve engagement by moving only the latter allows simplifying the structure so that the valve engagement is mounted on board the movement group.

Preferably, when the valve engagement is in wait position, the processing head is free to rotate around the geometric rotation axis.

Thus, a greater freedom of movement of the processing head is offered.

Preferably the valve connection comprises a shut-off valve configured so as to be opened following the operative coupling with the valve engagement.

The supply of pressurized fluid from the valve engagement to the valve connection is thus facilitated.

Preferably the valve connection comprises a shut-off valve configured so as to be closed following the operative decoupling from the valve engagement.

It is therefore easy to maintain the movement actuator under pressure, even after the valve engagement has been decoupled from the valve connection.

Preferably, two processing heads are provided that are adapted to rotate around the geometric rotation axis and to translate along the geometric rotation axis.

The Applicant deems that the arrangement of two processing heads can speed up the action of applying the semi-finished product on the radially inner surface of the tyre.

Preferably the two processing heads are mounted on a single shaft and are adapted to translate along the shaft.

It is thus possible to simplify the structure of the device in its entirety.

Preferably the two processing heads are adapted to translate in a respectively mirrored manner

Preferably the two processing heads are mutually uncostrained and each movable on command of a respective movement group.

The Applicant deems that the use of two processing heads, released with respect to each other, facilitates the obtainment of a high processing speed and a greater operating flexibility for the plant in its entirety.

Preferably the pressing element comprises at least one pressing roller rotatably supported by the distal end of the arm. Preferably the pressing roller is rotatably supported according to an axis thereof parallel to the geometric rotation axis.

Preferably the pressing roller is idle.

Preferably the pressing element comprises a pressure surface and a deflection surface, in which the deflection surface is arranged laterally with respect to the pressure surface. Preferably, the deflection surface is configured for acting against one portion of said semi-finished product far from the radially inner surface of the tyre.

Preferably, with respect to the geometric rotation axis, the deflection surface is positioned at a radial distance smaller than the radial distance at which the pressure surface is positioned. The deflection surface facilitates the correct application of the semi-finished product, also in the presence of portions of the semi-finished product itself, e.g. the axially opposite flaps, which instead of adhering against the radially inner surface of the tyre are still separated therefrom. In particular, the deflection surface is adapted to act against the separated portions during the course of the application, gradually moving them closer to the radially inner surface of the tyre so as to facilitate the pressing by the pressure surface.

Preferably the pressing element comprises one pressure surface and two deflection surfaces, in which the two deflection surfaces are arranged in axially opposite positions with respect to the pressure surface.

The arrangement of two deflection surfaces allows obtaining a correct deflection regardless of the direction of axial movement of the processing head with respect to the tyre.

Preferably the pressing element comprises a pressing roller. More preferably the pressing element comprises at least one auxiliary roller coaxial with the pressing roller.

Preferably the pressing roller has diameter greater than the diameter of the auxiliary roller.

Preferably, two auxiliary rollers are provided, arranged in axially opposite positions with respect to the pressing roller.

Preferably, in the work position, the pressing element operates in elastic thrust relation against the radially inner surface of the tyre.

Preferably arranging the semi-finished product comprises fixing a first annular portion of the semi-finished product against the radially inner surface of the tyre.

Preferably the first annular portion of the semi-finished product contains an axial middle line plane of the tyre.

Preferably, during said mutual movement the pressing element slides against at least one second annular portion of the semi-finished product complementary to said first annular portion, according to an axial progression starting from the first annular portion and axially moving away therefrom until reaching a circumferential end edge of the semi-finished product itself. Preferably, during said mutual movement the pressing element slides against the semi-finished product according to a helical trajectory.

Preferably, the processing head comprises a plurality of arms simultaneously movable towards the work position.

Preferably, the arms are pushed in the work position independent from each other.

Preferably the helical trajectory has a pitch P and wherein P = (L-K) x N, where:

L is an axial size of the pressing element,
K is a superimposition constant comprised between 0 and L,
N is the number of arms of the processing head.

Preferably positioning the arm in rest position comprises the action of operatively coupling a valve engagement with a valve connection carried by the processing head, in order to activate driving devices operating on said arm.

Preferably moving the arm in the work position comprises the action of operatively coupling a valve engagement with a valve connection carried by the processing head, in order to activate driving devices operating on said arm.

Preferably the action is also provided of decoupling the valve engagement from the valve connection before mutually moving the processing head and said tyre.

Preferably two processing heads are simultaneously rotated around the geometric rotation axis and are made to translate in a mirrored manner along the geometric rotation axis.

Preferably the thrust action of the pressing element against the semi-finished product towards the radially inner surface of the tyre is preceded by an action of moving the same semi-finished product closer towards the radially inner surface of the tyre. Further characteristics and advantages will be evident from the following description of a device for applying semi-finished products inside tyres for vehicle wheels, and of a process for applying semi-finished products inside tyres for vehicle wheels, in accordance with the present invention. Such description will be set forth hereinbelow as a non-limiting example with reference to the enclosed figures in which:

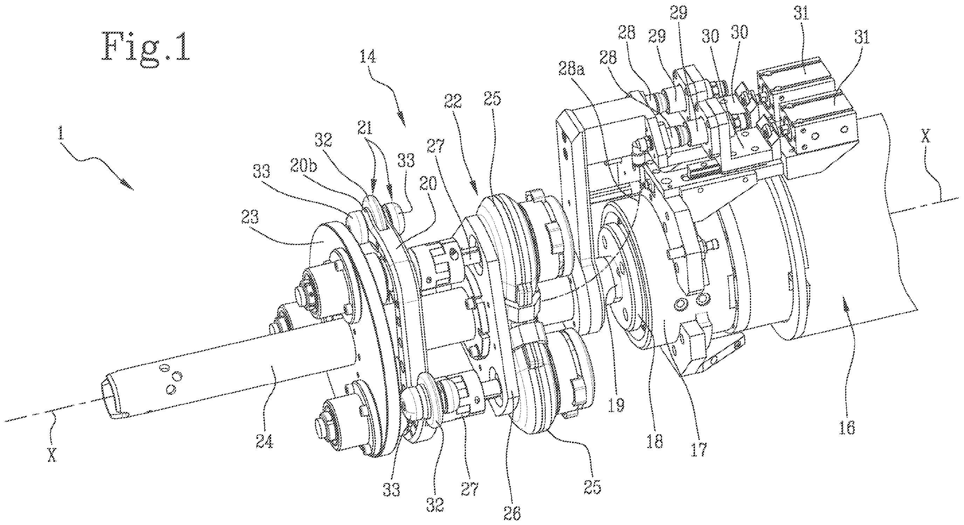

- figure 1 shows, in a perspective view, a working head that is part of a device according to the present invention, in a radially contracted condition;

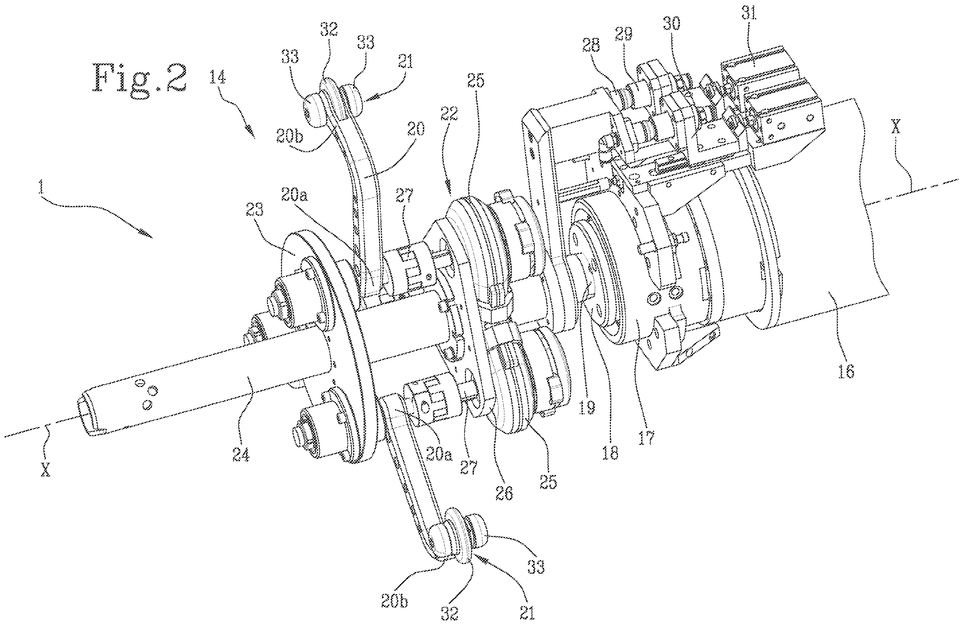

- figure 2 shows the processing head of figure 1 in a radially expanded condition:

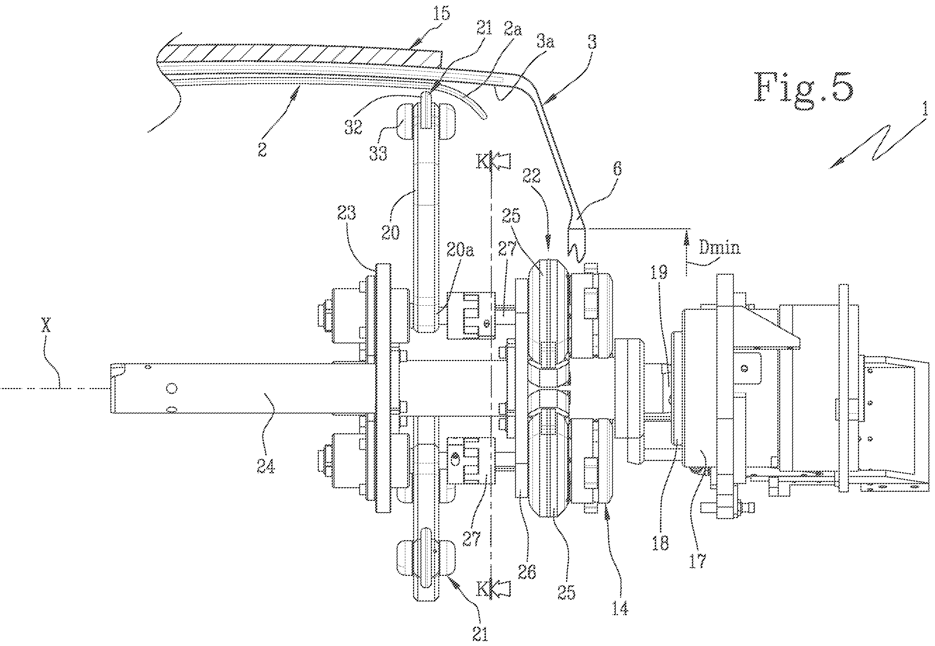

- figures 3 and 4 show the processing head sectioned according to the trace K-K of figure 5, respectively in radially contracted condition and in radially expanded condition;

- figure 5 shows, in side view, the processing head in operating conditions inside a tyre;
- figures 6a-6e are schematic views illustrating the application of a semi-finished product inside a tyre according to a sequence of actions of a process actuatable in accordance with the present invention;

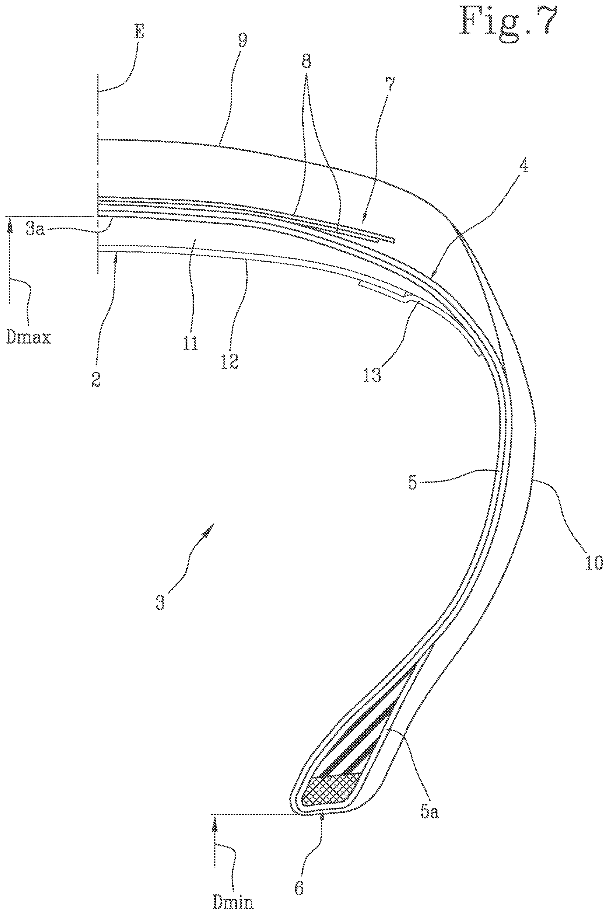

- figure 7 shows a tyre provided with a semi-finished product applicable by means of the present device.

With reference to the abovementioned figures, reference number 1 overall indicates a device for applying a semi-finished product on a radially inner surface of a tyre for vehicle wheels, in accordance with the present invention.

The device 1 is adapted to be used for carrying out or completing the application of at least one semi-finished product 2 inside a tyre 3. In the described embodiment, the tyre 3 has already completed the building cycle, and has a carcass structure 4 comprising at least one carcass ply 5 having end flaps 5a engaged, e.g. by means of turning up, around respective anchoring annular portions 6 in the zones normally identified as "beads". The carcass structure 4, shaped according to a toroidal configuration, is associated in radially outer position with a crown structure 7. The crown structure 7 comprises one or more belt layers 8 and a tread band 9 which defines a radially outer surface of the tyre 3.

Since the carcass structure 4 is toroidally shaped, a maximum inner diameter Dmax detectable on a radially inner surface 3a of the tyre 3 at an axial middle line plane E of the tyre itself is significantly greater than a minimum inner diameter Dmin detectable at the anchoring annular portions 6. By way of example, the difference between the maximum inner diameter Dmax and the minimum inner diameter Dmin can vary between about 50mm and about 350mm.

A pair of sidewalls 10 extend, respectively, from an axially outer edge of the tread band 9 up to in proximity of the respective anchoring annular portion 6, to externally cover the axially opposite sides of the carcass structure 4.

The tyre 3 is preferably at the green state, but it can also be moulded and vulcanised before receiving the semi-finished product 2.

According to possible embodiment variants, the application of the semi-finished product 2 can be actuated in the toroidally-shaped carcass structure 4 when the tyre 3 is in an intermediate step of its building, before or after the application of the belt layers 8.

The semi-finished product 2 is preferably made in the shape of a cylindrical sleeve. The semi-finished product 2 can comprise a layer of self-sealing material 11 possibly arranged on a protection film 12, for example made of thermoplastic material such as polyamide or polyester.

The axially opposite circumferential edges of the protection film 12 can be engaged with annular sealing inserts 13, e.g. in the form of elongated elements of elastomeric material, having the function of containment of the self-sealing material 11 between the protection film 12 and the radially inner surface 3a of the tyre 3.

The device 1 comprises a processing head 14 axially insertable in the tyre 3 while the latter is retained by a support group 15.

The support group 15 is attainable in a known manner and is therefore not described in detail. It must be able to grasp the tyre 3, in a manner such to allow the free axial access of the device 1 within the tyre 3. For example, the support group 15 can comprise radially movable elements for grasping the tyre 3 by the radially outer surface, so as to be able to retain and/or move it. In addition, the support group 15 is preferably suitable for grasping tyres of different diameters.

A movement group 16 is also provided that is configured for moving the processing head 14 with respect to the tyre 3 around and along a geometric rotation axis X of the processing head itself.

The relative movement between the processing head 14 and the tyre 3 can be determined by a cooperation between the support group 15 and the movement group 16.

In the illustrated preferred embodiment, the support group 15 is adapted to maintain the tyre 3 stopped, while the movement group 16 moves the processing head 14 both around the geometric rotation axis X and along the latter.

The movement group 16 can for example comprise at least one rotation actuator 17 adapted to rotate the processing head 14 around the geometric rotation axis X. In addition, the movement group 16 can comprise one or more translation actuators adapted to move the processing head 14 along the geometric rotation axis X.

In a possible non-illustrated embodiment solution, the translation actuator can be configured for operating on the support group 15, in order to move the tyre 3 along the geometric rotation axis X while the processing head 14 is actuated by the rotation actuator 17. In one possible embodiment variant, both the rotation 17 and translation actuators of the movement group 16 operate on the support group 15, in order to actuate both the rotational movement and the axial movement around and along the geometric rotation axis X.

In a particularly advantageous embodiment, the translation actuators and the rotation actuator 17, e.g. comprising respective electric motors and relative motion transmission systems, are integrated in a robotic arm, preferably of anthropomorphous type. In this case, the movement group 16 is constituted by a robotic arm, in which the rotation actuator 17 is supported on one of said movement axes.

Preferably, the processing head 14 is removably couplable to the movement group 16. For example, it is possible that the movement group 16 comprises a grip member 18 removably engageable with a coupling shank 19 carried by the processing head 14. Different processing heads 14 can be provided for, with respective coupling shanks 19 having identical geometric characteristics, such that they can be firmly grasped by a same grip member 18.

Preferably, when engaged with the grip member 18, the processing head 14 is projectingly extended from the movement group 16, along the geometric rotation axis X. In other words, it is preferable that the movement group 16 support and move the processing head 14, engaging it at an axial end thereof, leaving it completely free in a radial direction.

The processing head 14 comprises one or more radially extendable arms 20, each of which having a proximal end 20a that is constrained with respect to the processing head 14 and to distal end 20b carrying at least one pressing element 21.

Driving devices 22 operate on the arms 20 in order to move them, each between a rest position in which each pressing element 21 is moved closer to the geometric rotation axis X and a work position in which each pressing element 21 is moved away from the geometric rotation axis X, in order to exert a thrust action towards a radially inner surface 3a of the tyre 3. The proximal ends 20a of the arms 20, circumferentially and equally spaced around the geometric rotation axis X, are preferably constrained to a first flange 23 which is radially extended from one shaft 24 carrying at the end the coupling shank 19. Each proximal end 20a is rotatably engaged with the first flange 23 around an axis parallel to the geometric rotation axis X.

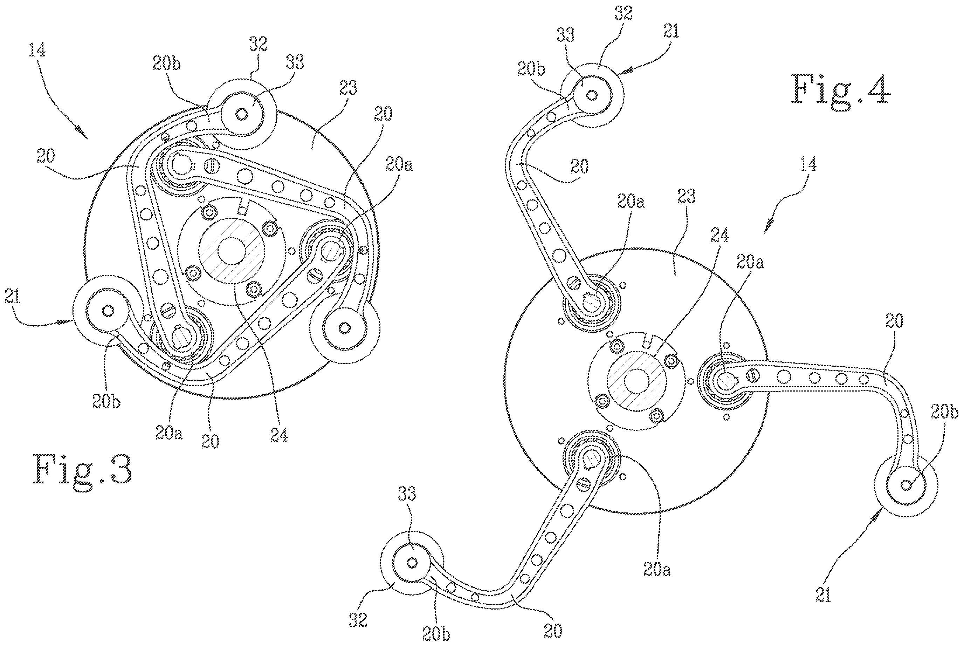

Preferably each arm 20 has a substantially curvilinear longitudinal extension lying in a plane orthogonal to the geometric rotation axis X. In particular, the curvilinear extension of each arm 20 defines a concavity which, at least in the rest position, is adapted to partially circumscribe the proximal end 20a of the circumferentially adjacent arm 20, as clearly illustrated in figure 3.

The driving devices 22, preferably configured for elastically pushing the pressing element 21 towards the work position, comprise one or more movement actuators 25, mounted for example on board the processing head 14 and operating on the proximal end 20a of each arm 20. More particularly, a movement actuator 25 is preferably provided, e.g. of rotary type, for each of said arms 20, such that the actuation of each arm 20 is independent of that of the other arms 20.

In the illustrated embodiment, the movement actuators 25 are carried, in circumferentially equidistant positions, from a second flange 26 integral with the shaft 24. Each movement actuator 25 is operatively connected with the proximal end 20a of the respective arm 20 by means of a transmission shaft 27, so as to set the arm itself in rotation in a plane perpendicular to the geometric rotation axis X.

Each movement actuator 25 preferably has pneumatic actuation and still more preferably is of double-acting type. For example, each movement actuator 25 comprises a containment shell internally having a first and a second chamber mutually connected by a movable element, operatively connected with the proximal end 20a of the arm 20 through the respective transmission shaft 27.

Each movement actuator 25 can for example be power supplied by one or more pneumatic ducts 28a leading to respective valve connections 28 carried by the processing head 14. Each valve connection 28 is operatively couplable with a valve engagement 29 carried by the movement group 16. In other words, each valve connection 28 carried by the processing head 14 and the respective valve engagement 29 carried by the movement group 16 are complementary with each other and are arranged in a manner such that, at least in some configurations taken by the processing head 14 during operation, they come to be sealingly coupled with each other.

Preferably, the valve engagements 29 are mounted on at least one slide 30 carried by the end portion of the movement group 16. The slide 30 is movable on command of one or more pneumatic cylinders 31, so as to axially translate each valve engagement 29 between a drive position in which it is operatively coupled to the valve connection 28 and a wait position in which it is operatively decoupled from the valve connection itself.

When the valve engagement 29 is in the wait position, the processing head 14 is free to rotate around the geometric rotation axis X.

Preferably in each valve connection 28, a shut-off valve (not represented) is integrated, configured so as to be opened following the operative coupling with the valve engagement 29, and closed following the operative decoupling from the valve engagement itself.

In accordance with some embodiments, each pressing element 21 comprises at least one pressing roller 32 supported by the distal end 20b of the arm 20, rotatably idle according to an axis thereof parallel to the geometric rotation axis X.

Each pressing element 21 can also comprise one or, as in the illustrated example, a pair of auxiliary rollers 33, having a smaller diameter with respect to the diameter of the pressing roller 32, arranged coaxially and laterally side-by-side with respect to the latter, respectively in axially opposite positions. The pressing roller 32 and each of the auxiliary rollers 33 respectively define, each in radially more external position with respect to the geometric rotation axis X, a pressure surface and a deflection surface. In a possible embodiment variant, the pressing element 21 can comprise only one auxiliary roller and/or only one deflection surface.

Each deflection surface is arranged laterally with respect to the pressure surface, i.e. spaced in axial direction with respect to the latter. With respect to the geometric rotation axis X, each deflection surface is positioned at a radial distance smaller than the radial distance at which the pressure surface is positioned. During the use of the device 1, it is provided that the self-sealing layer or other semi-finished product 2 is arranged against the radially inner surface 3a of the tyre 3.

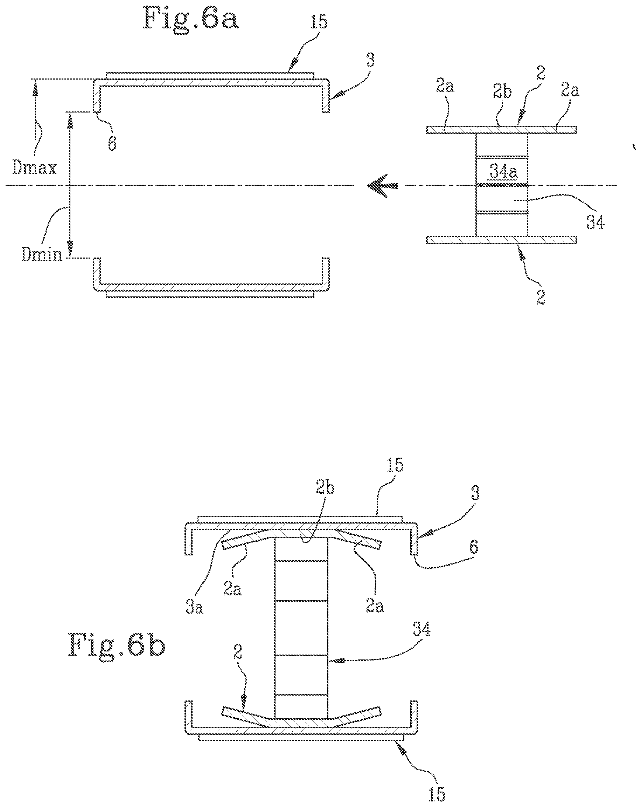

For example, as schematized in figure 6a, the semi-finished product 2 can be applied on a deposition surface 34a presented in radially outer position by an expandable drum 34, arranged in a radially contracted condition. Upon completed application, the semi-finished product 2 can have respective axially outer annular flaps 2a which project axially from the application surface of the drum.

The radially contracted drum 34 defines a maximum diameter bulk, including the bulk of the semi-finished product 2, smaller than the minimum inner diameter Dmin, and is thus adapted to be coaxially inserted in the tyre itself while the latter is retained by the support group 15.

Upon completed insertion, with the semi-finished product 2 in axially centred position with respect to the axial middle line plane E of the tyre 3, the drum 34 is radially expanded up to bringing a first annular portion 2b of the semi-finished product 2, containing the axial middle line plane E, to adhere against the radially inner surface 3a. Second annular portions of the semi-finished product 2, represented by the axially outer annular flaps 2a, can take on a progression converging towards the geometric rotation axis X, moving away from the radially inner surface 3a from which they consequently remain separated (figure 6b). The drum 34 is then contracted and axially removed from the tyre 3, leaving the semi-finished product 2 thus arranged in the tyre itself and freeing the access for the device 1 in order to complete the application of the semi-finished product 2.

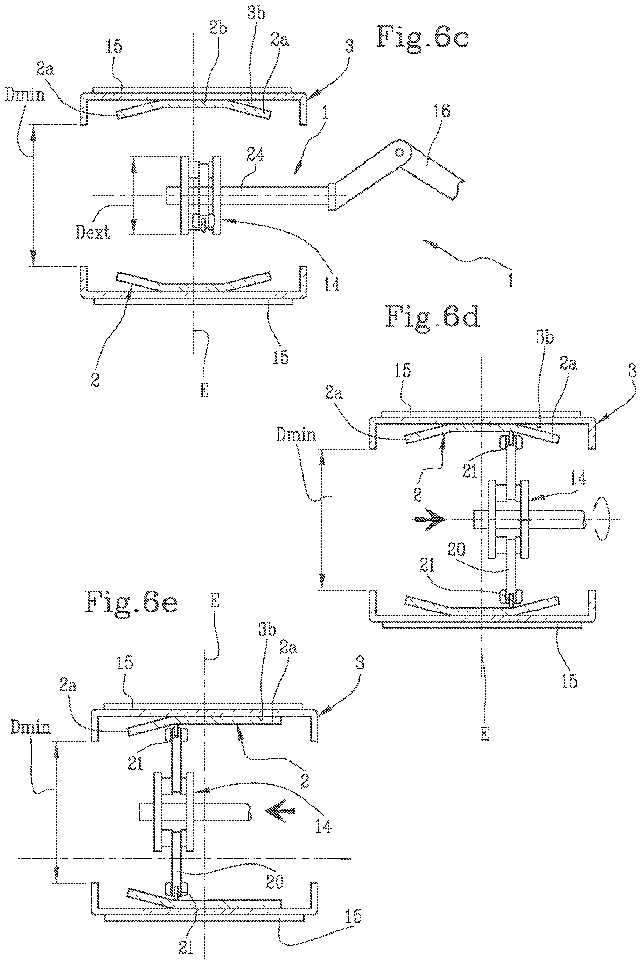

For such purpose, the processing head 14 carried by the movement group 16 is arranged in a radially contracted condition, in which a maximum diameter bulk Dext thereof, detectable at the pressing elements 21, is smaller than the minimum inner diameter Dmin. In such radially contracted condition, the processing head 14 is positioned coaxially with respect to the tyre 3, in a manner such that the geometric rotation axis X thereof substantially coincides with a rotation axis of the tyre itself. The movement group 16 then determines an axial translation of the processing head 14 in order to axially insert it within the tyre 3, preferably until the pressing elements 21 are brought to or in proximity to the axial middle line plane E, as exemplified in figure 6c.

Through the valve engagements 29 arranged in the drive position, air or another pressurized fluid is fed to the movement actuators 25. A unidirectional valve (not illustrated) with pneumatic reset also allows the continuity of the pressure on the arms 20. The arms 20 of the processing head 14 are consequently translated towards the work position, bringing the respective pressing elements 21 against the semi-finished product 2, in elastic thrust relation towards the radially inner surface 3a of the tyre 3.

Upon reaching the work position, a retreating of the slides 30 towards the wait position causes the disengagement of the valve engagements 29 from the valve connections 28, such that the processing head 14 can freely rotate with respect to the valve engagements 29 themselves and/or other stationary parts of the movement group 16.

The pressurized air retained in the movement actuators 25 facilitates the maintenance of an elastic thrust action of the pressing elements 21 towards the radially inner surface 3a. In addition to or as an alternative to the action of the pressurized air, springs or other elastic elements of mechanical type can be possibly associated with the movement actuators 25 or directly with the arms 20.

The rotation actuator 17 operating on the grip member 18 then actuates the processing head 14 in rotation around the geometric rotation axis X, while the translation actuator or actuators which equip the movement devices 16 transmit an axial movement thereto.

Consequently, the pressing rollers 32 follow the inner surface of the semi-finished product 2, initially at the first annular portion 2b thereof, consolidating the application thereof against the inner surface 3a of the tyre 3.

Each pressing roller 32 slides against the semi-finished product 2 according to a helical trajectory, having origin from the rotation motion around the geometric rotation axis X, summed with the translation motion along the geometric rotation axis X itself. Preferably the rotation motion and the translation motion are coordinated in a manner such that the helical trajectory has a pitch P in which:

$$P = (L-K) \times N$$

where:

N is the number of arms 20 of the processing head 14;

L is the axial size of the roller or another pressing element 21. More particularly L can be represented by the useful axial size of the pressing element 21, i.e. the axial size of the contact area which in the work conditions is established between the pressing element 21 and the semi-finished product 2. Different work conditions can in fact modify the extension of the contact area given the same geometry of the pressing element 21. For example, a greater thrust force applied by the arm 20 can determine a greater contact area. Analogously, a greater pliability of the semi-finished product 2 can also determine a greater contact area.

K is a superimposition constant comprised between 0 and L, preferably also provided in order to absorb possible variations of the axial size of the contact area. In other words, in following the helical trajectory, it is possible to provide that each pressing element 21 partially re-crosses over a zone that has already been previously pressed.

The pressing rollers 32 slide with an axial progression starting from the first annular portion 2b in the direction of one of the second annular portions represented by the axially outer annular flaps 2a. When they arrive in proximity to one of the second annular portions, e.g. the axially outer annular flap 2a situated to the right as in figure 6d, the auxiliary roller 33 directed towards such annular flap progressively comes into contact with the semi-finished product 2 preceding the action of the pressing roller 32. Therefore, in each of the points affected by the action of the auxiliary roller 33, the thrust action exerted by the pressing roller 32 is preceded by an action of deflection of the same semi-finished product 2 towards the radially inner surface 3a of the tyre 3, exerted by the same auxiliary roller 33. Consequently, in proximity to the axially outer annular flap 2a, the semi-finished product 2 is progressively moved close to the radially inner surface 3a of the tyre 3, facilitating the action of consolidation performed by the pressing roller 32. Even when the angle along which the axially outer annular flaps 2a converge towards the geometric rotation axis X is rather accentuated, the action of moving the flaps themselves closer to the radially inner surface 3a occurs in a progressive manner, so as to avoid inducing excessive stresses in the semi-finished product 2.

After the pressing rollers 32 have reached the axially outer edge of the semi-finished product 2, the movement of the processing head 14 is stopped with the valve connections 28 in axial alignment with respect to the valve engagements 29. With an actuation of the pneumatic cylinders 31, the coupling of the valve connections 28 with the valve engagements 29 is determined, so as to pneumatically drive the return of the arms 20 into the rest position in order to bring the processing head 14 back into the radially contracted condition.

An axial movement of the processing head 14 places the pressing rollers 32 again in proximity to the first annular portion 2b of the semi-finished product 2. The repositioning of the arms 20 in the work position is then driven, in order to initiate a new treatment cycle of the semi-finished product 2, aimed to determine the application of the axially outer annular flap 2a not treated in the preceding cycle as in figure 6e, possibly preceded by the consolidation of the first annular portion 2a at least in the zones thereof that are not yet treated.

Upon completed application, the rotation of the processing head 14 is once again stopped with the valve connections 28 axially aligned with the valve engagements 29, in order to allow the mutual coupling thereof and drive the repositioning of the arms 20 into the rest position.

Once the radially contracted condition is once again reached, an axial translation of the processing head 14 causes the axial disengagement thereof from the tyre 3.

In accordance with some embodiments of the invention, the device 1 can comprise two processing heads 14 adapted to rotate and translate with respect to the geometric rotation axis X. Each of the two processing heads 14 can substantially correspond with the technical description reported above for the single head.

When two processing heads 14 are present, they can be mounted in different configurations.

In accordance with a first configuration, the two processing heads 14 are mounted on a single shaft 24 and are adapted to translate along the shaft 24 itself, preferably in a respectively mirrored manner. In other words, a single movement group 16 can be provided, configured for rotating both the processing heads 14 around the geometric rotation axis X and for axially translating them in an opposite manner, e.g. starting from an initial mutually approached position to a final mutually moved-apart position.

In a second configuration, the two processing heads 14 are mutually unconstrained and are each movable on command of a respective movement group 16. In other words, in accordance with this configuration, the device 1 can comprise two different movement groups 16, each carrying a processing head 14 thereof. This embodiment in part represents a duplication of the embodiment which employs a single processing head 14, previously described.

**Claims**

1. Device for applying a semi-finished product (2) on a radially inner surface (3a) of a tyre (3), comprising:

   a support group (15) configured for retaining a tyre (3) being processed;
   a processing head (14) axially insertable in the tyre (3) retained by the support group (15); and
   a movement group (16) for mutually moving the processing head (14) and said tyre (3) around and along a geometric rotation axis (X);
   wherein the processing head (14) comprises at least one radially extendable arm (20), having a proximal end (20a) constrained with respect to the processing head (14) and a distal end (20b) carrying at least one pressing element (21);
   driving devices (22) operating on said arm (20) in order to move it between a rest position in which the pressing element (21) is moved close to the geometric rotation axis (X) and a work position in which the pressing element (21) is moved away from the geometric rotation axis (X) in order to exert a thrust action towards a radially inner surface (3a) of the tyre (3).

2. Device as claimed in claim 1, wherein the movement group (16) comprises a rotation actuator (17) adapted to rotate the processing head (14) around the geometric rotation axis (X), and a translation actuator adapted to move the processing head (14) along the geometric rotation axis (X).

3. Device as claimed in one or more of the preceding claims, wherein said movement group (16) comprises an anthropomorphic robotic arm (20).

4. Device as claimed in one or more of the preceding claims, wherein said at least one arm (20) has a substantially curvilinear longitudinal extension lying in a plane orthogonal to the geometric rotation axis (X).

5. Device as claimed in claim 4, wherein the processing head (14) comprises a plurality of arms (20), wherein in the rest position, the proximal end (20a) of each arm (20) is partially circumscribed by a concavity defined by the curvilinear extension of the circumferentially adjacent arm (20).

6. Device as claimed in one or more of the preceding claims, wherein said driving devices (22) are mounted on board the processing head (14).

7. Device as claimed in one or more of the preceding claims, wherein the movement group (16) comprises a grip member (18) removably engageable with the processing head (14).

8. Device as claimed in one or more of the preceding claims, comprising two processing heads (24) adapted to rotate around the geometric rotation axis (X) and to translate along the geometric rotation axis (X).

9. Device as claimed in one or more of the preceding claims, wherein the pressing element (21) comprises a pressure surface and a deflection surface, wherein the deflection surface is arranged laterally with respect to the pressure surface.

10. Device as claimed in claim 9 wherein, with respect to the geometric rotation axis (X), the deflection surface is positioned at a radial distance smaller than the radial distance at which the pressure surface is positioned.

11. Device as claimed in one or more of the preceding claims, wherein the pressing element (21) comprises a pressing roller (32) and at least one auxiliary roller (33), respectively coaxial.

12. Process for applying a semi-finished product (2) on a radially inner surface (3a) of a tyre (3), comprising:

arranging a tyre (3);
arranging a semi-finished product (2) on a radially inner surface (3a) of the tyre (3);
retaining the tyre (3) by means of a support group (15);
arranging at least one processing head (14) comprising at least one arm (20) radially extendable with respect to a geometric rotation axis (X), and carrying a pressing element (21) at a distal end (20b) thereof;
positioning said arm (20) in a rest position in which the pressing element (21) is moved close to the geometric rotation axis (X);
axially inserting the processing head (14) in the tyre (3) retained by the support group (15);
moving said arm (20) into a work position in which the pressing element (21) is moved away from the geometric rotation axis (X) in order to exert a thrust action on the semi-finished product (2) towards the radially inner surface (3a) of the tyre (3);
mutually moving the processing head (14) and said tyre (3) around and along said geometric rotation axis (X), making the pressing element (21) slide against the semi-finished product (2).

13. Process as claimed in claim 12, wherein arranging the semi-finished product (2) comprises fixing a first annular portion (2a) of the semi-finished product (2) against the radially inner surface (3a) of the tyre (3), wherein, during said mutual movement, the pressing element (21) slides against at least one second annular portion of the semi-finished product (2) complementary to said first annular portion (2a), according to an axial progression starting from the first annular portion (2a) and axially moving away therefrom until reaching a circumferential end edge of the semi-finished product itself.

14. Process as claimed in one or more of the claims 12 to 13, wherein two processing heads (24) are simultaneously rotated around the geometric rotation axis (X) and are made to translate in a mirrored manner along the geometric rotation axis (X).

15. Process as claimed in one or more of the claims 12 to 14, wherein the thrust action of the pressing element (21) on the semi-finished product (2) towards the radially inner surface (3a) of the tyre (3) is preceded by an action of moving the same semi-finished product (2) closer towards the radially inner surface (3a) of the tyre (3).

**Patentansprüche**

1. Vorrichtung zum Aufbringen eines halbfertigen Produkts (2) auf eine radial innere Oberfläche (3a) eines Reifens (3), umfassend:

eine Trägergruppe (15), die dazu ausgestaltet ist, einen Reifen (3) zu halten, der sich in Bearbeitung befindet;
eine Bearbeitungskopf (14), der axial in den Reifen (3) einführbar ist, der von der Trägergruppe (15) gehalten wird; und

eine Bewegungsgruppe (16) zur gegenseitigen Bearbeitungskopf (14) und des Reifens (3) um eine und entlang einer geometrischen Drehachse (X);

wobei der Bearbeitungskopf (14) zumindest einen radial ausfahrbaren Arm (20) umfasst, der ein proximales Ende (20a) aufweist, das in Bezug auf den Bearbeitungskopf (14) eingeschränkt ist, und ein distales Ende (20b), das zumindest ein Andrückelement (21) trägt; Antriebsvorrichtungen (22), die auf den Arm (20) wirken, um diesen zwischen einer Ruheposition, in welchem das Andrückelement (21) nahe an die geometrische Drehachse (X) bewegt wird, und einer Arbeitsposition zu bewegen, in welcher das Andrückelement (21) von der geometrischen Drehachse (X) weg bewegt wird, um eine Schubwirkung auf eine radial innere Oberfläche (3a) des Reifens (3) auszuüben.

2. Vorrichtung nach Anspruch 1, wobei die Bewegungsgruppe (16) ein Dreh-Stellglied (17) umfasst, das dazu ausgestaltet ist, den Bearbeitungskopf (14) um die geometrische Drehachse (X) zu drehen, und ein Verschiebe-Stellglied, das dazu ausgestaltet ist, den Bearbeitungskopf (14) entlang der geometrischen Drehachse (X) zu bewegen.

3. Vorrichtung nach einem oder mehreren der vorhergehenden Ansprüche, wobei die Bewegungsgruppe (16) einen anthropomorphen Roboterarm (20) umfasst.

4. Vorrichtung nach einem oder mehreren der vorhergehenden Ansprüche, wobei der zumindest eine Arm (20) eine im Wesentlichen gekrümmte Längserstreckung aufweist, die in einer Ebene liegt, die orthogonal zu der geometrischen Drehachse (X) ist.

5. Vorrichtung nach Anspruch 4, wobei der Bearbeitungskopf (14) eine Vielzahl von Armen (20) umfasst, wobei in der Ruheposition das proximale Ende (20a) eines jeden Arms (20) teilweise von einer Konkavität umschrieben wird, welche durch die gekrümmte Erstreckung des in Umfangsrichtung benachbarten Arms (20) definiert wird.

6. Vorrichtung nach einem oder mehreren der vorhergehenden Ansprüche, wobei die Antriebsvorrichtungen (22) an Bord des Bearbeitungskopfs (14) montiert sind.

7. Vorrichtung nach einem oder mehreren der vorhergehenden Ansprüche, wobei die Bewegungsgruppe (16) ein Greifelement (18) umfasst, das lösbar mit dem Bearbeitungskopf (14) in Eingriff bringbar ist.

8. Vorrichtung nach einem oder mehreren der vorhergehenden Ansprüche, umfassend zwei Bearbeitungsköpfe (24), die dazu geeignet sind, sich um die geometrische Drehachse (X) herum zu drehen und entlang der geometrischen Drehachse (X) verschoben zu werden.

9. Vorrichtung nach einem oder mehreren der vorhergehenden Ansprüche, wobei das Andrückelement (21) eine Andrückoberfläche und eine Umlenkoberfläche umfasst, wobei die Umlenkoberfläche seitlich in Bezug auf die Anpressoberfläche angeordnet ist.

10. Vorrichtung nach Anspruch 9, wobei die Umlenkoberfläche in einem radialen Abstand in Bezug auf die geometrische Drehachse (X) positioniert ist, der geringer ist als der radiale Abstand, in welchem die Andrückoberfläche positioniert.

11. Vorrichtung nach einem oder mehreren der vorhergehenden Ansprüche, wobei das Andrückelement (21) eine Andrückrolle (32) und zumindest eine Hilfsrolle (33) umfasst, die jeweils koaxial sind.

12. Verfahren zum Aufbringen eines halbfertigen Produkts (2) auf eine radial innere Oberfläche (3a) eines Reifens (3), umfassend:

Anordnen eines Reifens (3);
Anordnen eines halbfertigen Produkts (2) auf einer radial inneren Oberfläche (3a) des Reifens (3);
Halten des Reifens (3) mittels einer Trägergruppe (15);
Anordnen zumindest eines Bearbeitungskopfs (14), der zumindest einen Arm (20) umfasst, der in Bezug auf eine geometrische Drehachse (X) radial ausfahrbar ist und ein Andrückelement (21) an einem distalen Ende (20b) davon trägt;
Positionieren des Arms (20) in einer Ruheposition, in welcher das Andrückelement (21) nahe an die geometrische Drehachse (X) bewegt wird;
axiales Einführen des Bearbeitungskopfs (14) in den Reifen (3), der von der Trägergruppe (15) gehalten wird;
Bewegen des Arms (20) in eine Arbeitsposition, in welcher das Andrückelement (21) von der geometrischen Drehachse (X) weg bewegt wird, um eine Schubwirkung auf das halbfertige Produkt (2) zu der radial inneren Oberfläche (3a) des Reifens (3) hin auszuüben;
gegenseitiges Bewegen des Bearbeitungskopfs (14) und des Reifens (3) um die und entlang der geometrischen Drehachse (X), was das Andrückelement (21) veranlasst, gegen das halbfertige Produkt (2) zu gleiten.

13. Verfahren nach Anspruch 12, wobei das Anordnen des halbfertigen Produkts (2) das Fixieren eines ersten ringförmigen Abschnitts (2a) des halbfertigen Produkts (2) gegen die radial innere Oberfläche (3a) des Reifens (3) umfasst, wobei, während der gegenseitigen Bewegung, das Andrückelement (21) gegen zumindest einen zweiten ringförmigen Abschnitt des halbfertigen Produkts (2) gleitet, der zu dem ersten ringförmigen Abschnitt (2a) komplementär ist, gemäß einer axialen Progression, die von dem ersten ringförmigen Abschnitt (2a) ausgeht und sich davon axial weg bewegt, bis sie einen umlaufenden Endrand des halbfertigen Produkts selbst erreicht.

14. Verfahren nach einem oder mehreren der Ansprüche 12 bis 13, wobei zwei Bearbeitungsköpfe (24) gleichzeitig um die geometrische Drehachse (X) herum gedreht werden und veranlasst werden, sich auf spiegelbildliche Weise entlang der geometrischen Drehachse (X) zu verschieben.

15. Verfahren nach einem oder mehreren der Ansprüche 12 bis 14, wobei der Schubwirkung des Andrückelements (21) auf das halbfertige Produkt (2) gegen die radial innere Oberfläche (3a) des Reifens (3) hin ein Vorgang der Bewegung desselben halbfertigen Produkts (2) näher zu der radial inneren Oberfläche (3a) des Reifens (3) hin vorangeht.


**Revendications**

1. Dispositif pour appliquer un produit semi-fini (2) sur une surface radialement interne (3a) d'un pneu (3), comprenant :

   un groupe de support (15) configuré pour retenir un pneu (3) en cours de traitement ;
   une tête de traitement (14) pouvant être insérée axialement dans le pneu (3) retenu par le groupe de support (15) ; et
   un groupe de déplacement (16) pour déplacer mutuellement la tête de traitement (14) et ledit pneu (3) autour et le long d'un axe de rotation géométrique (X) ;
   dans lequel la tête de traitement (14) comprend au moins un bras radialement extensible (20), ayant une extrémité proximale (20a) contrainte par rapport à la tête de traitement (14) et une extrémité distale (20b) portant au moins un élément de pression (21) ;
   des dispositifs d'entraînement (22) agissant sur ledit bras (20) afin de le déplacer entre une position de repos dans laquelle l'élément de pression (21) est rapproché de l'axe de rotation géométrique (X) et une position de travail dans laquelle l'élément de pression (21) est éloigné de l'axe de rotation géométrique (X) pour exercer une action de poussée vers une surface radialement interne (3a) du pneu (3).

2. Dispositif tel que revendiqué dans la revendication 1, dans lequel le groupe de déplacement (16) comprend un actionneur de rotation (17) adapté pour faire tourner la tête de traitement (14) autour de l'axe de rotation géométrique (X), et un actionneur de translation adapté pour déplacer la tête de traitement (14) le long de l'axe de rotation géométrique (X).

3. Dispositif tel que revendiqué dans une ou plusieurs des revendications précédentes, dans lequel ledit groupe de déplacement (16) comprend un bras robotisé anthropomorphe (20) .

4. Dispositif tel que revendiqué dans une ou plusieurs des revendications précédentes, dans lequel ledit au moins un bras (20) a une extension longitudinale sensiblement curviligne se trouvant dans un plan orthogonal à l'axe de rotation géométrique (X).

5. Dispositif tel que revendiqué dans la revendication 4, dans lequel la tête de traitement (14) comprend une pluralité de bras (20), dans lequel dans la position de repos, l'extrémité proximale (20a) de chaque bras (20) est partiellement circonscrite par une concavité définie par l'extension curviligne du bras adjacent de manière circonférentielle (20).

6. Dispositif tel que revendiqué dans une ou plusieurs des revendications précédentes, dans lequel lesdits dispositifs d'entraînement (22) sont montés à bord de la tête de traitement (14).

7. Dispositif tel que revendiqué dans une ou plusieurs des revendications précédentes, dans lequel le groupe de déplacement (16) comprend un organe de préhension (18) pouvant s'engager de manière amovible avec la tête de traitement (14).

8. Dispositif tel que revendiqué dans une ou plusieurs des revendications précédentes, comprenant deux têtes de traitement (24) adaptées pour tourner autour de l'axe de rotation géométrique (X) et pour effectuer une translation le long de l'axe de rotation géométrique (X).

9. Dispositif tel que revendiqué dans une ou plusieurs des revendications précédentes, dans lequel l'élément de pression (21) comprend une surface de pression et une surface de déviation, où la surface de déviation est agencée latéralement par rapport à la surface de pression.

10. Dispositif tel que revendiqué dans la revendication 9 dans lequel, par rapport à l'axe de rotation géométrique (X), la surface de déviation est positionnée à une distance radiale inférieure à la distance radiale à laquelle la surface de pression est positionnée.

11. Dispositif tel que revendiqué dans une ou plusieurs des revendications précédentes, dans lequel l'élément de pression (21) comprend un rouleau de pression (32) et au moins un rouleau auxiliaire (33), respectivement coaxiaux.

12. Procédé pour appliquer un produit semi-fini (2) sur une surface radialement interne (3a) d'un pneu (3), comprenant le fait :

d'agencer un pneu (3) ;
d'agencer un produit semi-fini (2) sur une surface radialement interne (3a) du pneu (3) ;
de retenir le pneu (3) au moyen d'un groupe de support (15) ;
d'agencer au moins une tête de traitement (14) comprenant au moins un bras (20) radialement extensible par rapport à un axe de rotation géométrique (X), et portant un élément de pression (21) au niveau d'une extrémité distale (20b) de celui-ci ;
de positionner ledit bras (20) dans une position de repos dans laquelle l'élément de pression (21) est rapproché de l'axe de rotation géométrique (X) ;
d'insérer axialement la tête de traitement (14) dans le pneu (3) retenu par le groupe de support (15) ;
de déplacer ledit bras (20) dans une position de travail dans laquelle l'élément de pression (21) est éloigné de l'axe de rotation géométrique (X) afin d'exercer une action de poussée sur le produit semi-fini (2) vers la surface radialement interne (3a) du pneu (3) ;
de déplacer mutuellement la tête de traitement (14) et ledit pneu (3) autour et le long dudit axe de rotation géométrique (X), amenant l'élément de pression (21) à coulisser contre le produit semi-fini (2).

13. Procédé tel que revendiqué dans la revendication 12, dans lequel l'agencement du produit semi-fini (2) comprend la fixation d'une première partie annulaire (2a) du produit semi-fini (2) contre la surface radialement interne (3a) du pneu (3), où, lors dudit déplacement mutuel, l'élément de pression (21) coulisse contre au moins une deuxième partie annulaire du produit semi-fini (2) complémentaire à ladite première partie annulaire (2a), selon une progression axiale partant de la première partie annulaire (2a) et s'éloignant axialement de celle-ci jusqu'à atteindre un bord d'extrémité circonférentiel du produit semi-fini lui-même.

14. Procédé tel que revendiqué dans une ou plusieurs des revendications 12 à 13, dans lequel deux têtes de traitement (24) sont mises en rotation simultanément autour de l'axe de rotation géométrique (X) et sont amenées à effectuer une translation en miroir le long de l'axe de rotation géométrique (X).

15. Procédé tel que revendiqué dans une ou plusieurs des revendications 12 à 14, dans lequel l'action de poussée de l'élément de pression (21) sur le produit semi-fini (2) vers la surface radialement interne (3a) du pneu (3) est précédée d'une action de rapprochement du même produit semi-fini (2) vers la surface radialement interne (3a) du pneu (3).

Fig.1

Fig.2

Fig.4

Fig.3

Fig.5

Fig.6a

Fig.6b

Fig.6c

Fig.6d

Fig.6e

20

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090205765 A
- EP 3009260 A
- WO 2011064698 A
- EP 0507111 A1
- EP 0505814 A1
- EP 0585647 A1